# EUROPEAN PATENT APPLICATION

(11) **EP 3 842 160 A1**
(43) Date of publication of application: **30.06.2021**
(21) Application number: 19851677.5
(22) Date of filing: 20.08.2019
(51) Int. Cl.: B09B 3/00

(54) **USED DISPOSABLE DIAPER DISPOSAL APPARATUS AND DISPOSAL METHOD**

(30) Priority: 21.08.2018 JP 2018154742
(71) Applicant: FUJI SHOJI CO., LTD., Gifu, 501-6257 (JP)
(72) Inventor: TAKAGI Chikara, Hashima-shi, Gifu 501-6257 (JP)
(74) Representative: Winter, Brandl - Partnerschaft mbB
(86) International application number: PCT/JP2019/032454
(87) International publication number: WO 2020/040140

(57) **Abstract**

To provide a processing device and a processing method for a used disposable diaper capable of incinerating used disposable diapers hygienically and easily.

Provided is a used disposable diaper processing device which includes a freezing device freezing a used disposable diaper which contains a water-absorbent polymer between a non-water-permeable cover sheet and water-permeable non-woven fabric, a vacuum device evacuating a space area containing the frozen used disposable diaper by lowering an air pressure until water content contained in the used disposable diaper can be sublimated, and a sublimation progressing device promoting sublimation of the water content in the used disposable diaper which is frozen and arranged in the space area in a vacuum state.

## Description

### Technical Field

The present invention relates to a processing device and a processing method for a used disposable diaper.

### Background Art

Generally, a disposable diaper includes a non-water-permeable cover sheet, a water-permeable non-woven fabric, and a super absorbent polymer material accommodated between the non-water-permeable cover sheet and the water-permeable non-woven fabric. The super absorbent polymer material is accommodated in the form of fine powder.

When using disposable diapers, excrement containing a large amount of water is absorbed by the super absorbent polymer material and the super absorbent polymer material becomes a gel and retains water. The gel-like super absorbent polymer material traps water content without leaking even when pressed from the outside, so that excrement containing a large amount of water does not leak. Such disposable diapers are often incinerated after use.

PTL 1 describes that a used disposable diaper is crushed by a crusher and then heated at a high temperature to be carbonized.

### Citation List

### Patent Literature

PTL 1:JP-A-2006-272203

### Summary of Invention

### Technical Problem

However, super absorbent polymer materials are difficult to dry and burn once they retain water so that they can also be used as water-retaining materials for plant growth. Therefore, a huge amount of thermal energy is required for carbonization as in PTL 1. Further, crushing a disposable diaper containing water of filth as it is as in PTL 1 creates an unsanitary working environment.

The invention is made in view of the problem described above and an object thereof is to provide a processing device and a processing method for a used disposable diaper capable of hygienically and easily incinerating used disposable diapers.

### Solution to Problem

To solve the problem described above, a used disposable diaper processing device according to Claim 1 includes a freezing device freezing a used disposable diaper which contains a water-absorbent polymer between a non-water-permeable cover sheet and water-permeable non-woven fabric, a vacuum device evacuating a space area containing the frozen used disposable diaper by lowering an air pressure until water content contained in the used disposable diaper can be sublimated, and a sublimation progressing device promoting sublimation of the water content in the used disposable diaper which is frozen and arranged in the space area in a vacuum state.

In the specification, the vacuum means a state in a space filled with a gas having a pressure lower than the atmospheric pressure.

According to this, the used disposable diaper containing the water content in the water-absorbent polymer is frozen by the freezing device and becomes in the vacuum state by the vacuum device. As a result, the frozen water content can be sublimated to change from the ice state to water vapor. Since sublimation latent heat is required during sublimation, the water content of the used disposable diaper frozen by sublimation is deprived of heat and the temperature thereof drops further. When the temperature drops, it is necessary to increase the degree of vacuum or prevent the temperature from dropping in order to further sublimate the water content at the lowered temperature. Then, the sublimation progressing device raises the degree of vacuum or heats to supplement the sublimation latent heat, so that sublimation proceeds and the water content is changed from the ice state to water vapor.

In this way, sublimation can easily and quickly remove the water content swelled in the water-absorbent polymer, which is difficult to dry at room temperature or atmospheric pressure, and dry the used disposable diaper. The water-absorbent polymer from which the water content has been removed by sublimation becomes easy to burn because the portion containing ice becomes porous in addition to being dried, and can be incinerated extremely easily.

### Brief Description of Drawings

[Fig. 1] Fig. 1 is a schematic view illustrating a used disposable diaper processing apparatus according to a first embodiment of the invention.
[Fig. 2] Fig. 2 is a flowchart illustrating a processing process for processing used disposable diapers.
[Fig. 3] Fig. 3 is an explanatory diagram illustrating a structure of a disposable diaper.
[Fig. 4] Fig. 4 is an explanatory diagram for progressing sublimation.
[Fig. 5] Fig. 5 is a schematic view illustrating a used disposable diaper processing apparatus according to a second embodiment.

### Description of Embodiments

### (First Embodiment)

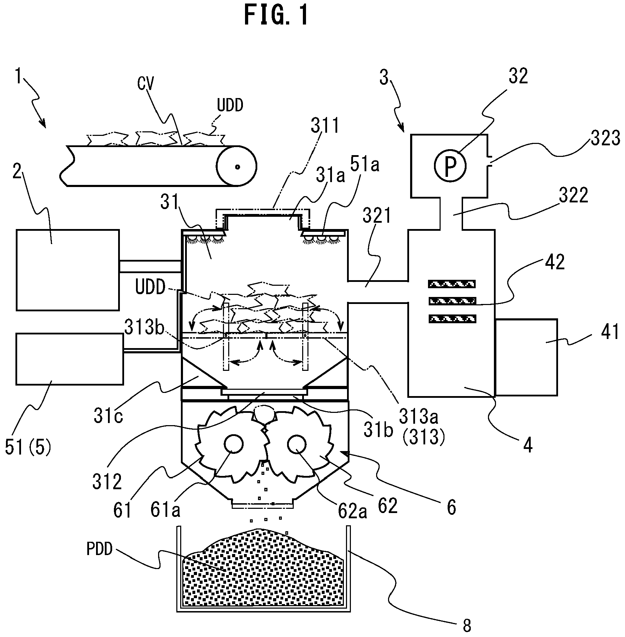

An embodiment embodying a used disposable diaper processing apparatus according to the invention will be described below with reference to Figs. 1 to 4. Fig. 1 illustrates an overall outline of a used disposable diaper processing device 1 according to the invention. The used disposable diaper processing device 1 includes a freezing device 2, a vacuum device 3, a cold trap 4, a sublimation progressing device 5, and a crushing device 6.

### (Freezing device)

As the freezing device 2, for example, a vaporization compression type refrigerator is used. Since the vaporization compression type refrigerator is a known technique, the description thereof will be omitted. In the case of pure water, it freezes at 0°C or lower, but the water content contained in a used disposable diaper UDD contains various impurities. Therefore, for freeze-drying, it is desirable to have a freezing capacity to cool it at least - 20°C to -40°C in consideration of safety. By cooling the temperature inside a vacuum container 31, which will be described below, the water content of the used disposable diaper UDD accommodated in the vacuum container 31 is mainly frozen.

### (Vacuum Device / Vacuum Container)

The vacuum device 3 includes the vacuum container 31 and a vacuum pump 32. The vacuum container 31 is formed in a cylindrical shape by, for example, a stainless steel member. An input port 31a for loading the used disposable diaper UDD is formed at an upper end portion and the input port 31a is sealed with an airtight lid 311. At the bottom of the vacuum container 31, a discharge port 31b communicating with the crushing device 6 side, which will be described below, is formed. A tilting guide 31c having an inverted conical shape which becomes lower toward the center is provided around the discharge port 31b. The discharge port 31b is sealed by a slide door 312 which slides to open and close. A conveyor CV is provided above the vacuum container 31 and the used disposable diaper UDD is conveyed to a position above the input port 31a.

### (Shelf Portion)

At the lower inside of the vacuum container 31, a shelf portion 313 on which the used disposable diaper UDD is arranged is provided. The shelf portion 313 is formed of, for example, a pair of semicircular plate-shaped portions 313a made of a stainless steel member. Each plate-shaped portion 313a is pivotable between a horizontal position and a vertical position by a rotation shaft 313b parallel to a side extending along a diameter. The rotation shaft 313b pivots in a forward-reverse direction by a pivot mechanism provided with an electric motor (not illustrated). When the two plate-shaped portions 313a are positioned in the horizontal position, they become disk-shaped, and an inner peripheral wall of the vacuum container 31 is closed so that the used disposable diaper UDD can be placed. When the two plate-shaped portions 313a are positioned in the vertical position, the used disposable diaper UDD placed on the plate is dropped downward.

### (Vacuum Gauge / Thermometer)

A vacuum gauge (not illustrated) is provided in the vacuum container 31 and the pressure inside the vacuum vessel 31 is detected. As the vacuum gauge, for example, a Pirani vacuum gauge is used.

A thermometer (not illustrated) detects the temperature of the used disposable diaper UDD and the shelf 313. As the thermometer, for example, a silicon diode thermometer or a platinum resistance thermometer used in a low temperature range is used.

### (Vacuum Pump)

As the vacuum pump 32, for example, a rotary pump is used. Since the rotary pump is a known technique, the description thereof will be omitted. The vacuum pump 32 communicates with the vacuum vessel 31 via a first flow passage 321, the cold trap 4, and a second flow passage 322. The vacuum pump 32 is provided with an exhaust port 323. By sealing the vacuum container 31 and driving the vacuum pump 32, the pressure inside the vacuum container 31 is reduced. The capacity of the vacuum pump 32 is preferably one that can maintain an atmospheric pressure of 100 Pa to 1 Pa for a long time.

### (Cold Trap)

The cold trap 4 is a device which collects water vapor. The cold trap 4 has a cold trap refrigerator 41 for cooling the refrigerant and a cooling pipe group 42 in which the refrigerant circulates inside and an outer surface is in contact with water vapor. Since the cold trap 4 is a known technique, the description thereof will be omitted. During freeze-drying, the water content removed is directly changed from the ice into water vapor. However, it is used because the volume of water vapor is extremely large in vacuum and the gas needs to be returned to ice again. Further, since the vacuum pump 32 dislikes water vapor, it collects water vapor with the cold trap 4 before performing vacuum exhaust. The cold trap 4 is used at a temperature lower than the temperature inside the vacuum container 31.

### (Sublimation Progressing device)

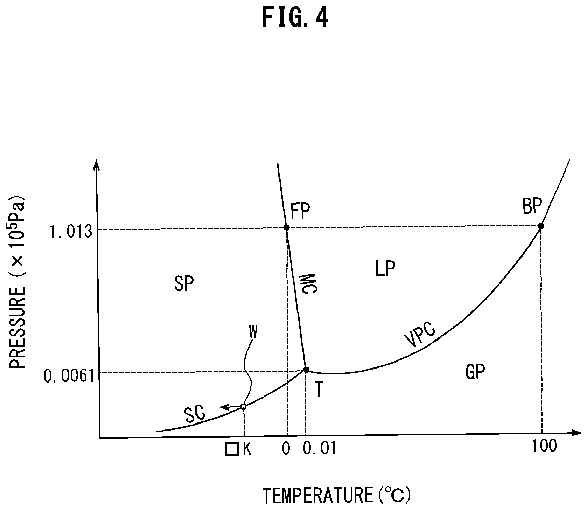

Fig. 4 is a phase diagram illustrating changes in the state of water due to changes in temperature and pressure. Water has three states: water (liquid phase) LP in a liquid state, ice (solid phase) SP in a solid state, and water vapor (gas phase) GP in a gaseous state. A boundary line between the water LP and the ice SP is called a melting curve MC and the water LP and the ice SP coexist stably. A boundary line between the water LP and the water vapor GP is called a vapor pressure curve VPC and the water LP and the water vapor GP coexist stably. A boundary line between the ice SP and the water vapor GP is called a sublimation curve SC and the ice SP and the water vapor GP coexist stably. A point where water LP, ice SP, and water vapor GP coexist is called a triple point T.

A point on the melting curve MC which reaches 0°C at 1 atm is a freezing point FP and a point on the vapor pressure curve VPC which reaches 100°C at 1 atm is a boiling point BP.

The sublimation progressing device 5 provides sublimation latent heat necessary for the continuous sublimation of the water content contained in the used diaper. The sublimation latent heat requires 675 kCal to convert 1 kg of ice (SP) into water vapor (GP) . The sublimation progressing device 5 is composed of, for example, an electric heater 51 provided with an infrared radiation unit 51a. The infrared radiation unit 51a is arranged, for example, on a ceiling portion around the input port 31a of the vacuum container 31. The electric heater 51 supplies sublimation latent heat to the frozen used disposable diaper UDD by heat radiation from infrared rays.

As illustrated in Fig. 4, for example, water content W of the used disposable diaper UDD cooled to -K°C and capable of sublimation is deprived of the sublimation latent heat from the used disposable diaper UDD during sublimation, and thus the temperature of the water content W further decreases. When the temperature drops, it is necessary to further reduce the pressure for sublimation, but when the pressure is constant, the sublimation stops due to the decrease in the temperature of the used disposable diaper UDD. Therefore, the sublimation progressing device 5 supplies the amount of heat required for continuous sublimation in a constant pressure state.

### (Crushing Device)

The crushing device 6 crushes the used disposable diaper UDD dried by freeze-drying into powder. As illustrated in Fig. 1, the crushing device 6 includes, for example, first and second crushing blades 61 and 62 provided below the vacuum container 31 and around the rotation shafts 61a and 62a arranged in parallel in a horizontal direction, an electric motor (not illustrated) which rotates the first and second crushing blades 61 and 62, and a gear mechanism (not illustrated) which rotates the first and second crushing blades 61 and 62 in opposite directions at the same rotation speed. The first and second crushing blades 61 and 62 rotate such that the used disposable diaper UDD passes between the blades from top to bottom. In this case, since the first and second crushing blades 61 and 62 mesh with each other, the used disposable diaper UDD is crushed while passing therethrough.

A powdered disposable diaper PDD which has been crushed into powder is stored in the container 8.

### (Disposable Diaper)

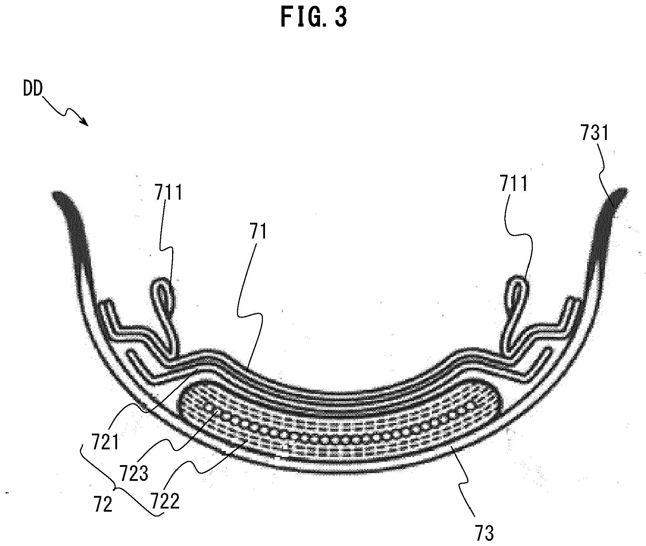

As illustrated in Fig. 3, a disposable diaper DD includes a surface layer (water-permeable non-woven fabric) 71, a water-absorbent layer (water-absorbent polymer or the like) 72, and a waterproof layer (non-water-permeable cover sheet) 73.

The surface layer 71 is formed of, for example, a non-woven fabric made of polypropylene. Gathers 711 are formed on the edge of the surface layer to prevent stool leakage and the like. The water-absorbent layer 72 is formed of water-absorbent paper 721, cotton-like pulp 722, and a polymer absorbent 723 (water-absorbent polymer). The polymer absorbent 723 becomes a gel when it contains water contents, and even when pressure is applied, the water does not exude. Therefore, the urine is prevented from returning. The waterproof layer 73 is formed of, for example, a polypropylene film. The gather or tape 731 is provided on the edge of the waterproof layer 73 to prevent urine leakage and the like. Among the constituent materials of the disposable diaper DD, the polymer absorbent 723 (water-absorbing polymer) becomes a gel containing water such as urine as described above. Also, since the contained water is difficult to evaporate and exhibits flame retardancy, high combustion energy is required for the incineration process of the used disposable diaper UDD.

### (Operation)

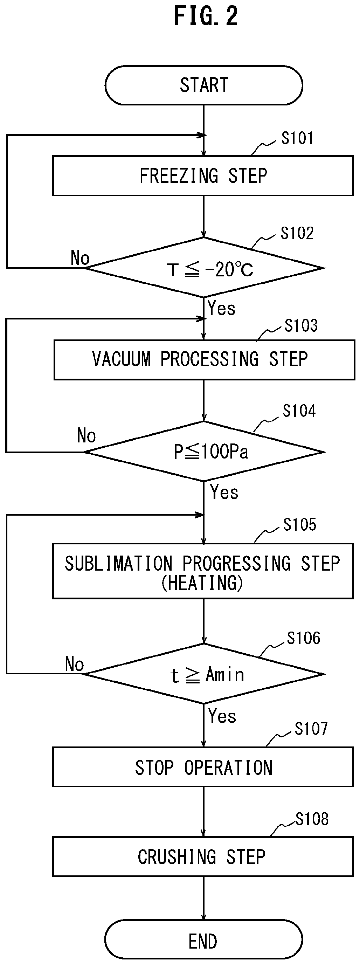

The operation of the used disposable diaper processing device 1 configured as described above will be described below based on the flowchart of Fig. 2.

First, the airtight lid 311 of the vacuum container 31 is in an opened state. The conveyor CV is operated and a plurality of used disposable diapers UDD with the planned weight are input from the input port of the vacuum container 31. Then, the airtight lid 311 is closed to seal the inside of the vacuum container 31.

Next, the freezing device 2 is operated (freezing step / Step 101 (hereinafter referred to as S101)). The thermometer is used to confirm that the freezing temperature of the used disposable diaper UDD reaches -20°C or lower (S102) .

When it is confirmed that the freezing temperature is -20°C or lower, the process proceeds to Step 103 and the vacuum pump 32 is operated (vacuum processing step / step S103). When it is confirmed that the temperature does not reach -20°C or lower, the process returns to Step 101 and the freezing step is continued.

Next, it is confirmed by the vacuum gauge that the inside of the vacuum container 31 has reached a predetermined degree of vacuum, for example, 100 Pa (S104).

When it is confirmed that the inside of the vacuum container 31 has reached 100 Pa, the process proceeds to Step 105 and the electric heater 51 is turned on to start supply of sublimation latent heat (sublimation progress processing step / S105).

Next, it is confirmed whether the supply of sublimation latent heat has been performed for a predetermined time A (S106) . The predetermined time A is an empirically or experimentally determined time for all ice to sublimate. It is calculated from the weight of the used diaper UDD to be put in, the type of the disposable diaper, and the like.

When it is confirmed that the predetermined time A has passed, the electric heater 51 is turned off and the vacuum pump 32 and the freezing device 2 are stopped (S107).

Next, the slide door 312 is opened and the dried used disposable diaper UDD is put into the crushing device 6 and crushed (crushing step / S108). The used disposable diaper UDD is crushed into a powder. Since the freeze-dried used disposable diaper UDD is crushed, it can be crushed extremely hygienically.

The powdered used disposable diaper UDD is incinerated, for example. In the used disposable diaper UDD, which has been freeze-dried by sublimation, the portion where there is ice becomes porous, and thus the used disposable diaper UDD is easily burned. Further, the used disposable diaper UDD is powdered, which makes it extremely easy to incinerate or landfill.

As is clear from the above description, the used disposable diaper processing device 1 according to the first embodiment freeze-dries the used disposable diaper UDD in which the polymer absorbent 723 is contained between the waterproof layer 73 and the surface layer 71.

The used disposable diaper processing device 1 includes the freezing device 2 which freezes the disposable diaper, the vacuum device 3 which evacuates a space area containing the frozen used disposable diaper UDD by lowering the air pressure until the water content contained in the used disposable diaper UDD can be sublimated, and the sublimation progressing device 5 which progresses the sublimation of water in the used disposable diaper UDD placed in the frozen and vacuumed space area.

According to this, the used disposable diaper UDD containing the water content in the polymer absorbent 723 is frozen by the freezing device 2 and the air pressure is lowered by the vacuum device 3 until sublimate can be performed. Since sublimation latent heat is required during sublimation, the water content of the used disposable diaper UDD is deprived of heat by sublimation, and thus the temperature thereof is further lowered. When the temperature is lowered, it is necessary to increase the degree of vacuum or prevent the temperature from dropping in order to further sublimate the water content of the used disposable diaper UDD. Therefore, the sublimation progressing device 5 raises the degree of vacuum or heats to supplement the latent heat of sublimation, so that sublimation proceeds and the water content is changed from the ice state to water vapor.

As described above, by sublimation, the water content swollen in the polymer absorbent 723, which is difficult to dry at normal temperature or atmospheric pressure, can be easily and surely removed, and thus the used disposable diaper UDD can be dried. The polymer absorbent 723 from which the water content has been removed by sublimation can be easily burned by being made porous by the portion containing ice in addition to being dried, and thus it can be incinerated extremely easily.

Further, the crushing device 6 for crushing the used disposable diaper UDD in which the water content has sublimated is further provided.

According to this, since the used disposable diaper UDD which has been sufficiently dried is crushed, the crushing process can be performed extremely hygienically without scattering the odor of feces and urine. By performing the crushing process, incineration, landfill, removal of recycled materials, and the like can be easily performed.

Further, the freezing device 2 freezes the used diaper at a temperature of -20°C or lower.

According to this, since the freezing temperature is sufficiently low, the water content contained in the used disposable diaper UDD can be reliably sublimated without being changed to water.

Further, the vacuum device 3 sets the atmospheric pressure in the space area including the used disposable diaper UDD to 100 Pa or less.

According to this, since the atmospheric pressure is sufficiently low, the water content contained in the used disposable diaper UDD can be reliably sublimated without being changed to water.

### (Second Embodiment)

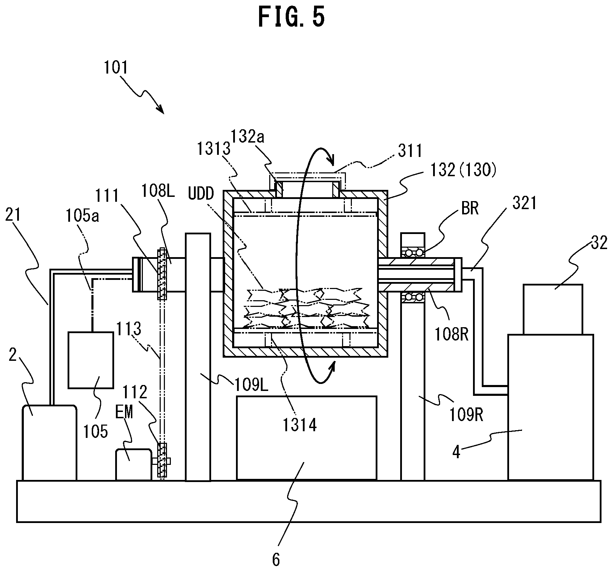

Next, a second embodiment of the used disposable diaper processing device will be described below with reference to Fig. 5.

In a used disposable diaper processing device 101 of the second embodiment, a vacuum container 132 of a vacuum device 130 can rotate around rotation shafts 108R and 108L extending horizontally. A sublimation progressing device is an electric heater 105 which heats a shelf portion 1313 in the vacuum container 132. Those points are different from the first embodiment. Since the other points are the same as those in the first embodiment, the same reference numerals and letters are given and the description thereof will be omitted.

### The differences will be mainly described below.

The vacuum container 132 has the rotation shafts 108R and 108L protruding horizontally in a left-right direction in Fig. 5. The rotation shafts 108R and 108L are integrally formed with an outer wall of the vacuum container 132 and are formed in a tubular shape. The rotation shafts 108R and 108L are rotatably supported by bearings BR provided on left and right columns 109R and 109L, respectively. In the rotation shaft 108R on a right side, a first flow passage 321 communicating with the inside of the vacuum container is penetrated along an axis of the rotation shaft 108R. When the rotation shaft 108R rotates, the first flow passage 321 is fixed without rotating in conjunction with the rotation shaft 108R.

A first spur gear 111 having a large diameter is provided around an outer circumference of the rotation shaft 108L on a left side. An electric motor EM is arranged below the rotation shaft 108L on the left side and a second spur gear 112 having a small diameter is provided around an output shaft of the electric motor EM. The first spur gear 111 and the second spur gear 112 are provided so as to face each other and a chain belt 113 is stretched between the first spur gear 111 and the second spur gear 112.

Those rotation shafts 108R and 108L, the first spur gear 111, the second spur gear 112, the chain belt 113, and the electric motor EM form a rotation device.

A refrigerant circulation pipe 21 of the freezing device 2 and an electric cord 105a of the electric heater 105 are inserted into the rotation shaft 108L on the left side. The refrigerant circulation pipe 21 of the freezing device 2 and the electric cord 105a of the electric heater 105 are fixed without being interlocked with the rotation of the rotation shaft 108L.

The vacuum container 132 is provided with the tubular shelf portion 1313 supported by two legs 1314 which are provided around an inner peripheral wall. The input port for inputting the used diaper UDD and the discharge port for discharging the sublimated used diaper UDD are one input discharge port 132a.

According to this, by rotating the vacuum container 132, the input used disposable diaper UDD can be freeze-dried while stirring. Therefore, it is possible to prevent the used disposable diapers UDD from overlapping each other and to sublimate the water content of the frozen used disposable diapers UDD with high efficiency.

In the above freezing step, the vacuum pump is operated when the freezing temperature is measured with the thermometer and fell below the predetermined temperature, but the invention is not limited to this. For example, the vacuum pump 32 may be operated when the minimum temperature arrival time (for example, 80 minutes) is exceeded after the freezing device 2 is operated.

Further, although the continuation of sublimation in the sublimation progress processing step is controlled at the predetermined time A, it may be controlled at a temperature of the used disposable diaper UDD and the shelf portion 313. When sublimation continues, the temperature of the used disposable diaper UDD will drop. When the sublimation is completed, the temperature of the used disposable diaper UDD stops dropping or rises. Therefore, this temperature change is detected to determine the end of the sublimation.

Further, the crushing process of crushing the used disposable diaper into pieces is performed after freeze-drying, but the invention is not limited to this. For example, it may be performed before freezing or after freezing and before sublimation proceeds. By powdering the used disposable diaper UDD, the total surface area can be increased and the drying time due to sublimation can be shortened.

Further, after freeze-drying, the used disposable diaper UDD is crushed by the crushing device 6, but the crushing device 6 may not be provided. By freeze-drying, the portion containing ice becomes porous, which facilitates incineration.

The invention is not limited to the embodiments described above and illustrated in the drawings and can be appropriately modified and implemented without departing from the gist.

### Reference Signs List

1: used disposable diaper processing device
2: freezing device
3: vacuum device
31: vacuum container
32: vacuum pump
4: cold trap
5: sublimation progressing device
6: crushing device
71: surface layer
72: water-absorbent layer
723: polymer absorbent (absorbent polymer)
101: used disposable diaper processing device
131: vacuum container
105: electric heater (sublimation progressing device) DD: disposable diaper
UDD: used disposable diaper

## Claims

1. A used disposable diaper processing device, comprising:
a freezing device freezing a used disposable diaper which contains a water-absorbent polymer between a non-water-permeable cover sheet and water-permeable non-woven fabric;
a vacuum device evacuating a space area containing the frozen used disposable diaper by lowering an air pressure until water content contained in the used disposable diaper can be sublimated; and
a sublimation progressing device promoting sublimation of the water content in the used disposable diaper which is frozen and arranged in the space area in a vacuum state.

2. The used disposable diaper processing device according to Claim 1, further comprising:
a crushing device crushing the used disposable diaper with sublimated water.

3. The used disposable diaper processing device according to Claim 1 or 2, wherein
the vacuum device includes a vacuum container accommodating the used disposable diaper, and
a rotating device for rotating the vacuum container and stirring the used disposable diaper accommodated in the vacuum container is further provided.

4. The used disposable diaper processing device according to any one of Claims 1 to 3, wherein
the freezing device freezes the used diaper at a temperature of -20°C or lower.

5. The used disposable diaper processing device according to Claim 4, wherein
the vacuum device sets an atmospheric pressure in the space area containing the used disposable diaper to 100 Pa or less.

6. A used disposable diaper processing method, comprising the steps of:
freezing a used disposable diaper which contains a water-absorbent polymer between a non-water-permeable cover sheet and water-permeable non-woven fabric;
evacuating a space area containing the frozen used disposable diaper by lowering an air pressure until water content contained in the used disposable diaper can be sublimated; and
promoting sublimation of the water content in the used disposable diaper which is frozen and arranged in the space area in a vacuum state.

7. The used disposable diaper processing method according to Claim 6, comprising the step of:
crushing the used disposable diaper with sublimated water into pieces after the step of promoting sublimation.
